(19) **Europäisches Patentamt**
**European Patent Office**
**Office européen des brevets**

(11) **EP 2 602 365 B1**

(12) **EUROPEAN PATENT SPECIFICATION**

(45) Date of publication and mention
of the grant of the patent:
**25.11.2015 Bulletin 2015/48**

(51) Int Cl.:
**D04B 1/00** (2006.01)   **D02G 1/02** (2006.01)
**D04B 1/16** (2006.01)   **B32B 5/02** (2006.01)

(21) Application number: **10855598.8**

(86) International application number:
**PCT/JP2010/063005**

(22) Date of filing: **02.08.2010**

(87) International publication number:
**WO 2012/017508 (09.02.2012 Gazette 2012/06)**

(54) **MULTILAYERED FABRIC AND TEXTILE PRODUCT**

MEHRLAGIGER STOFF UND TEXTILPRODUKT

ÉTOFFE MULTICOUCHE ET PRODUIT TEXTILE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**12.06.2013 Bulletin 2013/24**

(73) Proprietor: **Teijin Frontier Co., Ltd.
Osaka-shi, Osaka 541-0054 (JP)**

(72) Inventors:
• **YASUI, Satoshi
Osaka-shi
Osaka 541-0054 (JP)**

• **FUKURO, Tadayuki
Osaka-shi
Osaka 541-0054 (JP)**

(74) Representative: **Carpmaels & Ransford LLP
One Southampton Row
London WC1B 5HA (GB)**

(56) References cited:
**EP-A1- 2 037 026      WO-A1-2008/001920
JP-A- H09 316 757      JP-A- 2005 036 374
JP-A- 2005 036 374      JP-A- 2006 118 062
JP-A- 2007 291 567      JP-A- 2009 074 187
US-A1- 2008 085 398**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to an underwear garment using a multilayered cloth having excellent drying properties. The multilayered cloth is suitable for applications to garments, medical supplies, sanitary products, upholstery products, car interior materials, bedding products, and the like; and also to a textile product.

Background Art

Generally, as compared with hydrophilic fibers such as cotton and rayon, hydrophobic fibers such as polyester fibers and polyamide fibers are characterized by their excellent drying properties. Therefore, in order to enhance drying properties upon perspiration or drying properties after washing, use of a cloth made of hydrophobic fibers has been proposed.

However, in the case where the cloth is used for a garment to absorb a large amount of moisture, such as a garment used for sports accompanied by profuse perspiration, a garment used for sports in the rain or snow, or a garment used for underwater sports, its drying properties are not yet sufficient, causing a problem in that the wearer feels cold or sticky.

In addition, in a season when the frequency of washing increases, such as summer, a cloth having excellent drying properties is required.

As a method for enhancing the drying properties of a cloth, for example, Patent Document 1 proposes the following method. In a multilayered knitted fabric, as a fiber that forms one outermost layer (front-side layer), a fiber having a lower single-yarn fineness than the fiber that forms the other outermost layer (back-side layer) is placed, whereby perspiration is moved and diffused from the fabric back-side layer to the front-side layer, enhancing drying properties. However, in such a knitted fabric, drying properties have not yet been sufficient.

Incidentally, it is known to obtain a low-torque composite yarn by combining a false-twist crimped yarn having a torque in the S-direction and a false-twist crimped yarn having a torque in the Z-direction (see, e.g. , Patent Document 2 and Patent Document 3). However, such a composite yarn is aimed to solve the problem that is totally different from the problems that the invention is to solve.

Patent Document 4 describes a multilayered cloth comprising a multilayered woven fabric structure including two or more layers; or a multilayered knitted fabric structure including two or more layers.

Patent Document 1: JP-A-9-316757
Patent Document 2: JP-A-2003-166136
Patent Document 3: WO 2008/001920
Patent Document 4: JP 2009074187

Disclosure of the Invention

The invention provides an underwear garment using a multilayered cloth comprising a multilayered woven fabric structure including two or more layers; or a multilayered knitted fabric structure including two or more layers, the multilayered cloth being characterized in that a composite yarn having a torque of 30 T/m or less made of a false-twist crimped yarn having a torque in the S-direction and a false-twist crimped yarn (2 and 5) having a torque in the Z-direction is placed in an outermost layer of the multi-layered cloth, and the outermost layer in which the composite yarn is placed being on the inner side of the garment.

Problems that the Invention is to Solve

The invention has been accomplished against the above background. An object of the invention is to provide an underwear garment using a multilayered cloth made of a multilayered woven fabric structure including two or more layers or a multilayered knitted fabric structure including two or more layers, the multilayered cloth having excellent drying properties.

Means for Solving the Problems

The present inventors have conducted extensive research to achieve the above object. As a result, they have found that when a low-torque composite yarn made of a false-twist crimped yarn having a torque in the S-direction and a false-twist crimped yarn having a torque in the Z-direction is used in one of the outermost layers of a multilayered cloth, and a textile product such as a garment is obtained such that the outermost layer is on the skin side, extremely excellent drying properties can be obtained. The present inventors have further conducted extensive research and accomplished the invention.

Thus, according to the invention, "an underwear garment using a multilayered cloth made of a multilayered woven fabric structure including two or more layers or a multilayered knitted fabric structure including two or more layers, the multilayered cloth being characterized in that a composite yarn having a torque of 30 T/m or less made of a false-twist crimped yarn having a torque in the S-direction and a false-twist crimped yarn having a torque in the Z-direction is placed in an outermost layer of the multilayered cloth" is provided.

It is preferable that the composite yarn has been subjected to interlacing processing. It is also preferable that the composite yarn is made of a polyester fiber. It is also preferable that the composite yarn is made of a fiber having a single-yarn fineness of 4 dtex or less. It is also preferable that the composite yarn has a crimp degree of 2% or more.

In the multilayered cloth of the invention, it is preferable that a multifilament having a single-yarn fineness of 4.0 dtex or less is placed in an outermost layer on the opposite side from the outermost layer in which the composite yarn is placed. In this case, it is preferable that the multifilament is a false-twist crimped yarn having a single-yarn fineness of 1.2 dtex or less.

It is preferable that the multilayered cloth of the invention contains a fiber having a single-yarn fiber diameter of 1,000 nm or less as an additional fiber. It is also preferable that a polyether ester fiber made of a polyether ester elastomer containing polybutylene terephthalate as a hard segment and polyoxyethylene glycol as a soft segment or a composite yarn containing the polyether ester fiber is contained as an additional fiber. It is also preferable that a composite fiber containing a polyester component and a polyamide component joined together in a side-by-side manner is contained as an additional fiber. It is also preferable that the multilayered cloth has a three-layer structure including an outermost layer, an intermediate layer, and an outermost layer. In this case, it is preferable that the intermediate layer contains a fiber having a single-yarn fiber diameter of 1,000 nm or less. It is also preferable that the multilayered cloth is a knitted fabric. It is also preferable that the multilayered cloth has an areal weight of 200 g/m$^2$ or less. It is also preferable that the multilayered cloth has been subjected to water-absorbing processing. It is also preferable that the multilayered cloth has a moisture retention of 20% or less on the back side thereof.

In addition, the invention provides an underwear garment using the above multilayered cloth such that the outermost layer in which the composite yarn is placed is on the skin side. Advantage of the Invention

The invention provides an underwear garment using a multilayered cloth made of a multilayered woven fabric structure including two or more layers or a multilayered knitted fabric structure including two or more layers, the multilayered cloth having excellent drying properties.

Brief Description of the Drawings

Fig. 1 schematically shows an embodiment of the invention.
Fig. 2 schematically shows an embodiment of the invention.
Fig. 3 schematically shows an embodiment of the invention.
Fig. 4 schematically shows an embodiment of the invention.
Fig. 5 is an explanatory view showing an example of a single-yarn fiber cross-sectional shape applicable in the invention.
Fig. 6 shows a knitting pattern used in Example 1.
Fig. 7 shows a knitting pattern used in Example 2.
Fig. 8 shows a knitting pattern used in Example 4.

Reference Numerals in the Drawings

1    Multifilament (or false-twist crimped yarn)
2    False-twist crimped yarn
3    Composite yarn
4    Multifilament (or false-twist crimped yarn)
5    False-twist crimped yarn
6    Composite yarn
7    Multifilament (or false-twist crimped yarn)
8    Fiber having a single-fiber diameter of 1,000 nm or less, polyether ester fiber, or composite fiber

9 Composite yarn
10 Multifilament (or false-twist crimped yarn)
11 Fiber having a single-fiber diameter of 1,000 nm or less, polyether ester fiber, or composite fiber
12 Composite yarn

Best Mode for Carrying Out the Invention

Embodiments of the invention will be described in detail hereinafter.

First, the multilayered cloth of the invention is a multilayered cloth made of a multilayered woven fabric structure including two or more layers or a multilayered knitted fabric structure including two or more layers. The number of layers of the woven fabric structure or the knitted fabric structure is not particularly limited. However, in order to maintain a soft texture, the number of layers is preferably two (an outermost layer and an outermost layer) or three (an outermost layer, an intermediate layer, and an outermost layer). It is particularly preferable that the number of layers is three (an outermost layer, an intermediate layer, and an outermost layer). Incidentally, in the invention, upon use of the multilayered cloth, the outermost layer closest to the skin is referred to as a back-side layer, while the outermost layer closest to the outdoor air is referred to as a front-side layer.

In addition, one of the two outermost layers (preferably the back-side layer) has placed therein a composite yarn having a torque of 30 T/m or less made of a false-twist crimped yarn having a torque in the S-direction and a false-twist crimped yarn having a torque in the Z-direction. The composite yarn may be contained in both of the two outermost layers, but is preferably contained only in one outermost layer.

False-twist crimped yarns include a so-called one-heater false-twist crimped yarn obtained by setting a false twist in a first heater zone and a so-called second-heater false-twist crimped yarn obtained by further introducing the yarn into a second heater zone and subjecting the same to a relaxation heat treatment to reduce the torque. In addition, depending on the direction of twisting, false-twist crimped yarns also include a false-twist crimped yarn having a torque in the S-direction and a false-twist crimped yarn having a torque in the Z-direction. These false-twist crimped yarns can be used in the invention.

The composite yarn can be produced by the following method, for example. That is, it is possible to obtain a one-heater false-twist crimped yarn by twisting a yarn using a twisting apparatus through a first roller and a heat treatment heater at a set temperature of 90 to 220°C (more preferably 100 to 190°C). Alternatively, as necessary, it is also possible to obtain a second-heater false-twist crimped yarn by further introducing the yarn into a second heater zone to perform a relaxation heat treatment. The draw ratio during false-twist texturing is preferably within a range of 0.8 to 1.5. The number of false twists is preferably such that $\alpha$ is 0.5 to 1.5 in the following equation: the number of false twists (T/m) = $(32500/(\text{Dtex})^{1/2}) \times \alpha$. It is usually suitable that $\alpha$ is about 0.8 to 1.2. Here, Dtex is the total fineness of the yarn. As the twisting apparatus used, a disk-type or belt-type friction twisting apparatus allows for easy twisting and hardly causes yarn breakage, and thus is preferable. However, it is also possible to use a pin-type twisting apparatus. In addition, depending on the direction of twisting, the torque of the false-twist crimped yarn can be selected from the S-direction and the Z-direction. Next, two or more kinds of false-twist crimped yarns are combined together, thereby forming the composite yarn mentioned above.

It is preferable that the composite yarn is interlaced by interlacing processing. In order not to deteriorate the soft texture or stretchability, it is preferable that the number of nodes (interlacing) is within a range of 30 to 90/m. When the number is more than 90/m, the soft texture or stretchability may be deteriorated. Conversely, when the number is less than 30/m, the bundling properties of the composite yarn may be insufficient, deteriorating knitting/weaving properties. Incidentally, the interlacing treatment (interlacing processing) may be a treatment using ordinary interlacing nozzles.

It is important that the composite yarn thus obtained has a torque of 30 T/m or less (preferably 10 T/m or less, and particularly preferably no torque (0 T/m)). When such a low-torque composite yarn is used in an outermost layer (preferably back-side layer), bulkiness increases. Thus, when the product is used, the perspiration produced can be quickly absorbed and then quickly transferred to other layers. As a result, extremely excellent drying properties are obtained. A lower torque is more preferable, and a non-torque yarn (0 T/m) is the most preferable. In order to achieve a non-torque yarn, it is suitable that when a false-twist crimped yarn having a torque in the S-direction and a false-twist crimped yarn having a torque in the Z-direction are combined together, two kinds of false-twist crimped yarns having the same torque except different torque directions are used.

In addition, it is preferable that the composite yarn has a crimp degree of 2% or more (more preferably 10 to 20%). When the crimp degree is less than 2%, a soft texture or stretchability may not be sufficiently obtained.

It is preferable that the composite yarn has a single-yarn fineness of 4 dtex or less (preferably 0.00002 to 2.0 dtex, and particularly preferably 0.1 to 2.0 dtex). A smaller single-yarn fineness is more preferable. It is also possible to use a yarn having a single-yarn fiber diameter of 1,000 nm or less, which is so-called "nanofiber". When the single-yarn fineness is more than 4 dtex, a soft texture may not be obtained. In addition, it is preferable that the composite yarn has a total fineness within a range of 33 to 220 dtex. Further, it is preferable that the number of filaments in the composite yarn is within a range of 50 to 300 (more preferably 100 to 300).

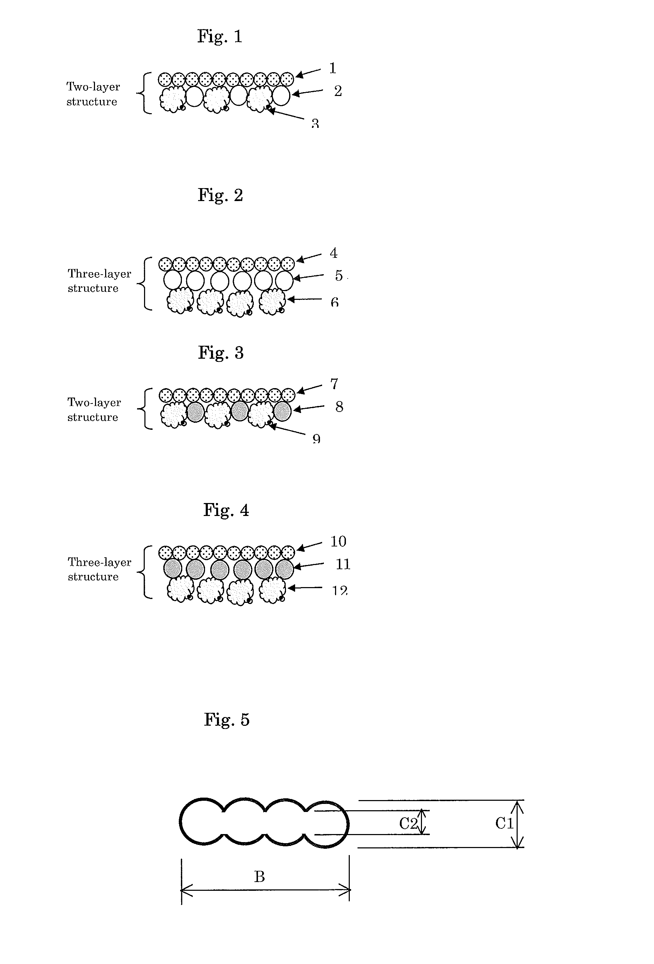

In addition, as the single-yarn cross-sectional shape of the composite yarn, it may be an ordinary round cross-section, and may also be a modified cross-sectional shape other than the round cross-section. As examples of modified cross-sectional shapes, cross-sections that are triangular, square, cross-shaped, flat, flat with constrictions, H-shaped, W-shaped, and the like are mentioned. When such a modified cross-sectional shape is employed, water absorbability can be imparted to a cloth. In particular, when a flat modified cross-sectional shape with constrictions as shown in Fig. 5 is employed, not only water absorbability but also particularly excellent softness can be imparted to a cloth. In this case, in terms of the softness of the cloth, it is preferable that the cross-sectional flatness of the flat cross-sectional shape, which is represented by the ratio B/C1 of the length B in the direction of the longitudinal centerline relative to the maximum width C1 in the direction orthogonal to the direction of the longitudinal centerline, is within a range of 2 to 6 (more preferably 3.1 to 5.0). In addition, in terms of water absorbability, it is preferable that the ratio C1/C2 of the maximum width C1 relative to the minimum width C2 is within a range of 1.05 to 4.00 (more preferably 1.1 to 1.5).

Fibers forming the composite yarn are not particularly limited, and it is possible to use polyester fibers, acrylic fibers, nylon fibers, rayon fibers, acetate fibers, natural fibers such as cotton, wool, and silk, and combinations thereof. In particular, in order to obtain excellent drying properties, polyester fibers are preferable. Preferred examples of polyesters include polyesters whose main acid component is terephthalic acid and whose main glycol component is at least one member selected from the group consisting of $C_{2-6}$ alkylene glycols, i.e., ethylene glycol, trimethylene glycol, tetramethylene glycol, pentamethylene glycol, and hexamethylene glycol. Among them, a polyester whose main glycol component is ethylene glycol (polyethylene terephthalate) and a polyester whose main glycol component is trimethylene glycol (polytrimethylene terephthalate) are particularly preferable.

Such a polyester may contain a small amount of a copolymer component (usually 30 mol% or less) as necessary. Examples of bifunctional carboxylic acids other than terephthalic acid used in this case include aromatic, aliphatic, and alicyclic bifunctional carboxylic acids such as isophthalic acid, naphthalenedicarboxylic acid, diphenyldicarboxylic acid, diphenoxyethanedicarboxylic acid, β-hydroxyethoxybenzoic acid, p-oxybenzoic acid, 5-sodium sulfoisophthalic acid, adipic acid, sebacic acid, and 1,4-cyclohexanedicarboxylic acid. In addition, examples of diol compounds other than the above glycols include aliphatic, alicyclic, and aromatic diol compounds such as cyclohexane-1,4-dimethanol, neopentyl glycol, bisphenol A, and bisphenol S, as well as polyoxyalkylene glycols.

The polyester may be synthesized by any method. For example, in the case of polyethylene terephthalate, it may be produced by the following reactions: a first-stage reaction in which terephthalic acid and ethylene glycol are directly subjected to an esterification reaction, a lower alkyl ester of terephthalic acid such as dimethyl terephthalate and ethylene glycol are subjected to a transesterification reaction, or terephthalic acid and ethylene oxide are allowed to react, thereby producing a glycol ester of terephthalic acid and/or an oligomer thereof; and a second-stage reaction in which the product of the first-stage reaction is heated under reduced pressure to effect a polycondensation reaction until the desired degree of polymerization is reached. In addition, the polyester may be a polyester obtained by material recycling or chemical recycling, and may also be a polyester obtained using a catalyst containing a specific phosphorus compound or titanium compound as described in JP-A-2004-270097 and JP-A-2004-211268. Further, the polyester may also be a biodegradable polyester, such as polylactic acid or stereocomplex polylactic acid, or polyethylene terephthalate obtained using a monomer component produced from a biomass raw material, i.e., a substance of biological origin, as described in JP-A-2009-091694.

When the polyester contains a UV absorber in an amount of 0.1 wt% or more (preferably 0.1 to 5.0 wt%) relative to the weight of the polyester, this imparts UV-shielding properties to the multilayered cloth and thus is preferable. Examples of UV absorbers include benzoxazine-based organic UV absorbers, benzophenone-based organic UV absorbers, benzotriazole-based organic UV absorbers, and salicylic-acid-based organic UV absorbers. Among them, benzoxazine-based organic UV absorbers do not decompose during spinning and thus are particularly preferable.

Preferred examples of benzoxazine-based organic UV absorbers include those disclosed in JP-A-62-11744, such as 2-methyl-3,1-benzoxazin-4-one, 2-butyl-3,1-benzoxazin-4-one, 2-phenyl-3,1-benzoxazin-4-one, 2,2'-ethylenebis(3,1-benzoxazin-4-one), 2,2'-tetramethylenebis(3,1-benzoxazin-4-one), 2,2'-p-phenylenebis(3,1-benzoxazin-4-one), 1,3,5-tri(3,1-benzoxazin-4-on-2-yl)benzene, and 1,3,5-tri(3,1-benzoxazin-4-on-2-yl)naphthalene.

In addition, when the polyester contains a delusterant (titanium dioxide) in an amount of 0.2 wt% or more (preferably 0.3 to 2.0 wt%) relative to the weight of the polyester, this imparts anti-see-through properties to the multilayered cloth and thus is preferable.

Further, as necessary, the polyester may also contain one or more kinds of micropore-forming agents (organic metal sulfonates), coloring inhibitors, heat stabilizers, flame retardants (diantimony trioxide), fluorescent brighteners, coloring pigments, antistatic agents (metal sulfonates), moisture absorbents (polyoxyalkylene glycols), antibacterial agents, and other inorganic particles.

In the multilayered cloth of the invention, fibers to be placed in layers other than the outermost layer in which the composite yarn is placed are not particularly limited. However, in order to obtain excellent drying properties, it is preferable that other layers have placed therein a multifilament that is made of the above polyester fiber and has a single-yarn fineness of 4.0 dtex or less (more preferably 0.00002 to 2.0 dtex, and particularly preferably 0.1 to 2.0 dtex). In order to further enhance drying properties, it is preferable that a false-twist crimped yarn having a single-yarn fineness of 1.2 dtex or less (more preferably 0.00002 to 1.2 dtex) is used as the multifilament.

In addition, in order to impart water absorbability to the multilayered cloth of the invention, it is also preferable to add, as an additional fiber, the fiber having a single-yarn fiber diameter of 1,000 nm or less (sometimes also referred to as "nanofiber") described in JP-A-2007-291567, the polyether ester fiber made of a polyether ester elastomer containing polybutylene terephthalate as a hard segment and polyoxyethylene glycol as a soft segment described in JP-A-2005-36374 or a composite yarn containing the polyether ester fiber, or the composite fiber having a polyester component and a polyamide component joined together in a side-by-side manner described in JP-A-2006-118062, for example. Among them, in order to enhance water absorbability, a fiber having a single-yarn fiber diameter of 1, 000 nm or less (preferably 10 to 1,000 nm, and more preferably 510 to 800 nm) is particularly preferable.

As the fiber having a single-yarn fiber diameter of 1,000 nm or less, it is preferable to use a fiber obtained by dissolving a sea component from a sea-island type composite fiber. As the sea-island type composite fiber in this case, it is preferable to use the sea-island type composite fiber multifilament (the number of islands: 100 to 1,500) disclosed in JP-A-2007-2364.

Here, preferred examples of sea component polymers include polyesters, polyamides, polystyrenes, and polyethylenes having excellent fiber-forming properties. For example, as polymers readily soluble in an aqueous alkali solution, polylactic acid, ultra-high molecular weight polyalkylene oxide condensation polymers, polyesters copolymerized with a polyethylene glycol compound, and polyesters copolymerized with a polyethylene glycol compound and 5-sodium sulfoisophthalic acid are suitable. Among them, a polyethylene terephthalate copolyester having an intrinsic viscosity of 0.4 to 0.6 copolymerized with 6 to 12 mol% 5-sodium sulfoisophthalic acid and 3 to 10 wt% polyethylene glycol having a molecular weight of 4,000 to 12,000 is preferable.

Meanwhile, preferred examples of island component polymers include polyesters such as fiber-forming polyethylene terephthalate and polytrimethylene terephthalate, polybutylene terephthalate, polylactic acid, stereocomplex polylactic acid, and polyesters copolymerized with a third component. As long as the object of the invention is not impaired, as necessary, the polymer may also contain one or more kinds of micropore-forming agents, cationic dye dyeable agents, coloring inhibitors, heat stabilizers, fluorescent brighteners, delusterants, colorants, moisture absorbents, and inorganic fine particles.

In a sea-island type composite fiber made of the sea component polymer and the island component polymer, it is preferable that the melt viscosity of the sea component during melt spinning is higher than the melt viscosity of the island component polymer. In addition, it is preferable that the island component has a diameter within a range of 10 to 1,000 nm. In the case where the diameter is not a perfect circle, the diameter of the circumscribed circle is determined. In the sea-island type composite fiber, the sea-island composite weight ratio (sea: island) is preferably within a range of 40:60 to 5:95, and particularly preferably within a range of 30:70 to 10:90.

Such a sea-island type composite fiber multifilament can be easily produced by the following method, for example. That is, melt spinning is performed using the sea component polymer and the island component polymer. The spinneret used for melt spinning may be any spinneret, such as one having hollow pins or micropores for forming an island component. The extruded composite fiber multifilament yarn having a sea-island type cross-section is solidified with cooling air, melt-spun preferably at 400 to 6,000 m/min, and then wound up. The obtained unstretched yarn is separately subjected to a stretching process and formed into a composite fiber having desired strength/elongation/thermal shrinkage characteristics, or alternatively taken up by a roller at a constant rate without winding up, subsequently subjected to a stretching process, and then wound up. Either method is possible. Further, false-twist crimping may also be performed. In such a sea-island type composite fiber multifilament, the single-yarn fiber fineness, the number of filaments, and the total fineness are preferably such that the single-yarn fiber fineness is within a range of 0.5 to 10.0 dtex, the number of filaments is within a range of 5 to 75, and the total fineness is within a range of 30 to 170 dtex (preferably 30 to 100 dtex) .

Next, the sea-island type composite fiber multifilament is formed into a cloth as necessary and then treated with an aqueous alkali solution, whereby the sea component is dissolved by the aqueous alkali solution from the sea-island type composite fiber multifilament. As a result, the sea-island type composite fiber multifilament is formed into a fiber having a single-yarn fiber diameter of 1,000 nm or less. As the conditions for the aqueous alkali solution treatment in this case, it is suitable that the treatment is performed using an aqueous NaOH solution having a concentration of 1 to 4% at a temperature of 55 to 70°C.

In the multilayered cloth of the invention, examples of preferred embodiments include, as schematically shown in Fig. 1, an embodiment in which a multifilament (or a false-twist crimped yarn) is placed in one outermost layer, and the above composite yarn and a false-twist crimped yarn are placed in the other outermost layer; as schematically shown in Fig. 2, an embodiment in which a multifilament (or a false-twist crimped yarn) is placed in one outermost layer, a false-twist crimped yarn is placed in the intermediate layer, and the above composite yarn is placed in the other outermost layer; as schematically shown in Fig. 3, an embodiment in which a multifilament (or a false-twist crimped yarn) is placed in one outermost layer, and the above composite yarn and the above additional fiber (a fiber having a single-yarn fiber diameter of 1,000 nm or less, the above polyether ester fiber, or the above composite fiber) are placed in the other outermost layer; and, as schematically shown in Fig. 4, an embodiment in which a multifilament (or a false-twist crimped yarn) is placed in one outermost layer, the above additional fiber (a fiber having a single-yarn fiber diameter of 1,000 nm or less, the above polyether ester fiber, or the above composite fiber) is placed in the intermediate layer, and the above composite yarn is placed in the other outermost layer. Among them, in order to obtain excellent water absorbability, an embodiment in which a multifilament (or a false-twist crimped yarn) having a single-yarn fineness of 1.5 dtex or less and made of 36 or more filaments is placed in one outermost layer, a fiber having a single-fiber diameter of 1,000 nm or less is placed in the intermediate layer, and the above composite yarn is placed in the other outermost layer is particularly preferable. When the cloth is used such that the outermost layer in which the composite yarn is placed is on the skin side, perspiration is quickly transferred from one outermost layer to the other outermost layer, whereby excellent drying properties are obtained. Therefore, this is preferable.

In the multilayered cloth of the invention, the woven structure or the knitted fabric structure is not particularly limited as long as it is a woven fabric structure having a multilayer structure including two or more layers or a knitted fabric structure having a multilayer structure including two or more layers. Examples of knitted fabric structures include circular-knitted fabrics such as ponti roma, Milano rib, tuck rib, back pique, single pique, and double pique, single warp-knitted fabrics such as half, back half, queens cord, and shark skin, and double warp-knitted fabrics such as double raschel and double tricot. Examples of woven fabric structures include multilayer woven fabrics that can have a multilayer structure, such as double warp-woven fabrics and double weft-woven fabrics. Among them, in order to obtain excellent drying properties, a knitted fabric structure is preferable.

In the cloth, the weaving density or the knitting density is not particularly limited. However, in order to obtain excellent drying properties, excellent water absorbability, an excellent texture, etc., in the case of a woven fabric, it is preferable that the warp density is within a range of 50 to 200 yarns/2.54 cm and the weft density is within a range of 50 to 200 yarns/2.54 cm. In addition, in the case of a knitted fabric, it is preferable that the density is within a range of 30 to 100 courses/2.54 cm and 20 to 80 wales/2.54 cm. In addition, in order not to deteriorate lightweight properties, it is preferable that the areal weight eventually obtained is 200 $g/m^2$ or less (more preferably 20 to 200 $g/m^2$).

The multilayered cloth of the invention can be easily knitted or woven from the above composite yarn using an ordinary knitting machine or weaving machine. In addition, as long as the object of the invention is not impaired, the multilayered cloth of the invention may also be additionally subjected to ordinary dyeing and finishing processing, water-absorbing processing, water-repellent processing, napping processing, UV shielding, or other various function-imparting processes using an antibacterial agent, a deodorant, an insect repellant, a phosphorescent agent, a retroreflective agent, a minus ion generator, etc. Here, as water-absorbing processing (perspiration-absorbing processing), it is preferable that a hydrophilizing agent, such as polyethylene glycol diacrylate, a derivative thereof, or a polyethylene terephthalate-polyethylene glycol copolymer, is used for processing in the same bath during dyeing or applied to the cloth during the final setting step. It is preferable that the amount of hydrophilizing agent attached is within a range of 0.25 to 0.50 wt% relative to the weight of the cloth.

In the multilayered cloth thus obtained, the above composite yarn is placed in one of the outermost layers, and also the composite yarn is bulky (having bulkiness). Therefore, the perspiration produced is quickly absorbed and quickly transferred to other layers. Thus, extremely excellent drying properties are obtained. In addition, the multilayered cloth allows little perspiration to come back and thus is highly comfortable.

Here, it is preferable that the outermost layer in which the composite yarn is placed has a surface moisture retention of 20% or less. Moisture retention is to be measured as follows. In a room controlled at a temperature of 20°C and a humidity of 65%RH, 0.1 cc of distilled water is dropped onto the back side of a sample cut to a size of 10 cm $\times$ 10 cm. Three minutes later, the sample is sandwiched in a filter paper, and a load of 10 $g/cm^2$ is applied thereto. Based on the weight of the filter paper increased in 30 seconds, moisture retention is calculated.

Moisture retention [%] = ((the weight of filter paper after dropping water [gr]) - (the weight of filter paper before dropping water [gr])/0.1 $\times$ 100

It is also preferable that the multilayered cloth has a stickiness of 98 cN (100 gf) or less as defined below. Stickiness is to be measured as follows. A sample 15 cm long and 6 cm wide is placed on a metal roller having a diameter of 8 cm. One end thereof is attached to a stress/strain gauge, and a clip weighing 9.8 cN (10 gf) is attached to the other end of the cloth. Next, while rotating the metal roller at a surface speed of 7 cm/sec, 5 $cm^3$ of water is poured between the metal roller and the sample using a syringe. The resulting tension on the sample is measured by the stress/strain gauge, and stickiness is evaluated based on the maximum tension.

It is also preferable that the multilayered cloth has drying properties of 30 minutes or less as defined below. Drying properties are to be measured as follows. In a room controlled at a temperature of 20°C and a humidity of 65%RH, 0.1 cc of distilled water is dropped onto a sample cut to a size of 10 cm $\times$ 10 cm, and then the weight of the sample is measured over time. Based on the time until the dropped moisture completely dries, drying properties (drying time) are evaluated.

Next, the textile product of the invention uses the above multilayered cloth such that the outermost layer in which the composite yarn is placed is on the skin side. The textile product may be selected from the group consisting of garments (e.g., garments for sports, underwear garments, garments for women, and garments for men), medical supplies, sanitary products (e.g., diapers and nursing sheets), upholstery products (e.g., sofa coverings and chair coverings), car interior materials (e.g., car seat skin materials), and bedding products (e.g., bed coverings and pillow coverings) According to the invention, the garment is an underwear garment.

The textile product uses the multilayered cloth such that the outermost layer in which the composite yarn is placed is on the skin side. Therefore, the perspiration produced is quickly absorbed and quickly transferred to other layers. Thus, extremely excellent drying properties are obtained. In addition, the textile product allows little perspiration to come back and thus is highly comfortable.

[Examples]

(1) Torque

A sample (crimped yarn) about 70 cm long is transversely tensioned. An initial load of 0.18 mN × indicated tex (2 mg/de) is hung in the center, and then both ends are put together.

The yarn starts rotating due to residual torque. The yarn is kept as it is until the initial load becomes stationary, whereby a twisted yarn is obtained. The twisted yarn thus obtained is measured for the number of twists per 25 cm by a twist counter under a load of 17.64 mN × indicated tex (0.2 g/de). The obtained number of twists (T/25 cm) is multiplied by 4 to determine the torque (T/m).

(2) Degree of Interlacing

An interlaced yarn 1 m long is taken under a load of 8 . 82 mN × indicated tex (0.1 g/de). The load is removed, and the yarn is then allowed to stand at room temperature for 24 hours. After that, the number of nodes is read and indicated as the number of nodes/m.

(3) Crimp Degree

A test yarn is wound around a sizing reel having a perimeter of 1.125 m to prepare a skein having a dry fineness of 3,333 dtex. The skein is hung on a hanger nail of a scale plate. An initial load of 5.9 cN (6 gf) is applied to the lower part thereof, and a further load of 588 cN (600 gf) is applied; the resulting skein length is measured as L0. The load is then immediately removed from the skein, and the skein is removed from the hanger nail of the scale plate and immersed in boiling water for 30 minutes, allowing crimps to be developed. The skein treated with boiling water is taken out from boiling water, and moisture contained in the skein is removed by absorption on a filter paper. The skein is then air-dried for 24 hours at room temperature. The air-dried skein is hung on a hanger nail of a scale plate. A load of 588 cN (600 gf) is applied to the lower part thereof, and the skein length is measured after 1 minute as L1a. The load is then removed from the skein, and the skein length is measured after 1 minute as L2a. The crimp degree (CP) of the test filament yarn is calculated by the following equation.

$$CP\ (\%)\ =\ ((L1a\ -\ L2a)/L0)\ \times\ 100$$

(4) Moisture Retention

In a room controlled at a temperature of 20°C and a humidity of 65%RH, 0.1 cc of distilled water is dropped onto the back side of a sample cut to a size of 10 cm × 10 cm. Three minutes later, the sample is sandwiched in a filter paper, and a load of 10 gf/cm$^2$ is applied thereto. Based on the weight of the filter paper increased in 30 seconds, moisture retention is calculated.

$$\text{Moisture retention [\%]} = ((\text{the weight of filter paper}$$

$$\text{after dropping water [gf]}) - (\text{the weight of filter paper before}$$

$$\text{dropping water [gf]})/0.1 \times 100$$

(5) Stickiness

A sample 15 cm long and 6 cm wide is placed on a metal roller having a diameter of 8 cm. One end thereof is attached to a stress/strain gauge, and a clip weighing 9.8 cN (10 gf) is attached to the other end of the sample. Next, while rotating the metal roller at a surface speed of 7 cm/sec, 5 cm$^3$ of water is poured between the metal roller and the sample using a syringe. The resulting tension on the sample is measured by the stress/strain gauge, and stickiness is evaluated based on the maximum tension. A maximum tension of 98cN (100 gf) or less is rated as excellent.

(6) Drying Properties

In a room controlled at a temperature of 20°C and a humidity of 65%RH, 0.1 cc of distilled water is dropped onto a sample cut to a size of 10 cm × 10 cm, and then the weight of the sample is measured over time. Based on the time (minutes) until the dropped moisture completely dries, drying properties are evaluated. A time of 30 minutes or less is rated as excellent.

(7) Melt Viscosity

A polymer after a drying treatment is set in an orifice having the extruder melting temperature for spinning, maintained in a molten state for 5 minutes, and then extruded under several levels of loads applied. The resulting shear rate and melt viscosity are plotted. The plots are gently connected to form a shear rate-melt viscosity curve, and the melt viscosity at a shear rate of 1,000 seconds$^{-1}$ is observed.

(8) Dissolution Rate

Using a spinneret having 0.3 $\phi$-0.6 L × 24 H for each of sea and island components, a yarn is wound up at a spinning rate of 1,000 to 2,000 m/min and further stretched such that the residual elongation is within a range of 30 to 60% to give a multifilament of 84 dtex/24 fil. At a temperature at which dissolution in respective solvents is to be performed, the weight loss rate is calculated from the dissolution time and the dissolved amount at a bath ratio of 100.

(9) Single-Yarn Fiber Diameter

A cloth is photographed under an electron microscope, then the single-yarn fiber diameter (n = 5) is measured, and the average is determined.

[Example 1]

Polyethylene terephthalate (delusterant content: 0.3 wt%) was melt-spun at 280°C from an ordinary spinning apparatus, then taken up at a rate of 2,800 m/min, and wound up without stretching to give a semi-stretched polyester yarn of 90 dtex/48 fil (single-yarn fiber cross-sectional shape: round cross-section).

Next, the polyester yarn was subjected to simultaneous stretching and false-twist crimping under the following conditions: draw ratio: 1.6, the number of false twists: 2,500 T/m (S-direction), heater temperature: 180°C, yarn speed: 350 m/min.

Meanwhile, the polyester yarn was subjected to simultaneous stretching and false-twist crimping under the following conditions: draw ratio: 1.6, the number of false twists: 2,500 T/m (Z-direction), heater temperature: 180°C, yarn speed: 350 m/min.

Next, the false-twist crimped yarn having a torque in the S-direction and the false-twist crimped yarn having a torque in the Z-direction were combined together and subjected to an air-interlacing treatment (interlacing processing) to give a composite yarn (110 dtex/96 fil, crimp degree: 7%, torque: 0 T/m). The air-interlacing treatment was performed using an interlacing nozzle at an overfeed rate of 1.0% and a pneumatic pressure of 0.3 M Pa (3 kgf/cm$^2$) to give 60 nodes per m.

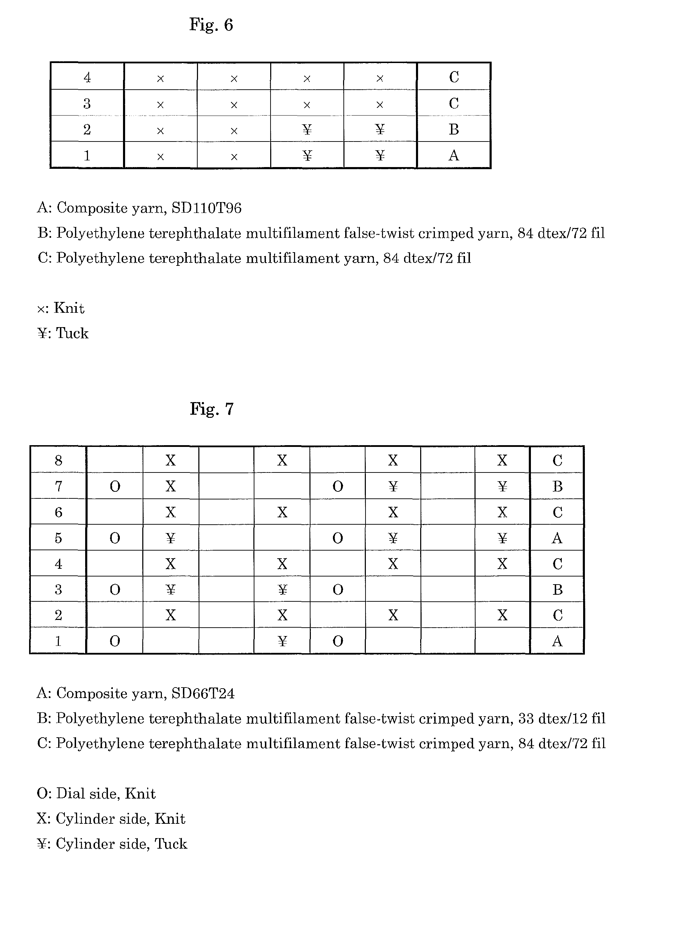

Next, using a 28-gauge single circular-knitting machine, a cord-knitted fabric was formed according to the knitting structure shown in Fig. 6 from the composite yarn (A), a polyethylene terephthalate multifilament false-twist crimped yarn of 84 dtex/72 fil having a torque of 92 T/m (B), and a polyethylene terephthalate multifilament yarn of 84 dtex/72 fil (C) (the grey fabric density was 42 courses/2.54 cm and 30 wales/2.54 cm, and the areal weight was 58 g/m$^2$). Next, the knitted fabric was subjected to ordinary dyeing and finishing processing (high-pressure dyeing at 130°C for 30 minutes and dry heat setting at 170°C as the final setting). The obtained knitted fabric was a knitted fabric having a two-layer structure. One outermost layer was made of A, B, and C, and the other outermost layer was made of A and B. The knitted fabric had a moisture retention of 15% on the back and 45% on the front, a stickiness of 74 cN (75 gf), and drying properties of 19 minutes. In addition, perspiration absorbed by the outermost layer made of A and B (back side) was instantaneously transferred to the outermost layer on the other side, and little wetness was allowed to come back from the back side to the skin. The drying properties were thus excellent.

Next, using the knitted fabric such that the outermost layer made of A and B (back side) was on the skin side, a garment for sports (short-sleeved T-shirt) and an underwear garment were obtained and worn. As a result, little coming back from the garments to the skin was allowed, and the garments thus had excellent drying properties and were comfortable.

[Example 2]

A non-torque composite yarn (A) (torque: 0 T/m) having a total fineness/the number of single yarns of 66 dtex/24 fil was obtained in the same manner as in Example 1, except that the total fineness/the number of single yarns of the semi-stretched polyester yarn in Example 1 was changed to 56 dtex/12 fil.

Next, using a 28-gauge double circular-knitting machine, a back-pique knitted fabric was formed according to the knitting structure shown in Fig. 7 from the composite yarn (A), a polyethylene terephthalate multifilament false-twist crimped yarn of 33 dtex/12 fil having a torque of 206 T/m (B), and a polyethylene terephthalate multifilament yarn of 84 dtex/72 fil (C) (the grey fabric density was 46 courses/2.54 cm and 37 wales/2.54 cm, and the areal weight was 80 g/m$^2$). Next, the knitted fabric was subjected to ordinary dyeing and finishing processing (high-pressure dyeing at 130°C for 30 minutes and dry heat setting at 170°C as the final setting). The obtained knitted fabric was a knitted fabric having a two-layer structure. One outermost layer (front side) was made of C, and the other outermost layer (back side) was made of A and B. The knitted fabric had a moisture retention of 4% on the back and 38% on the front, a stickiness of 51 cN (52 gf), and drying properties of 21 minutes. In addition, perspiration absorbed by the outermost layer made of A and B (back side) was instantaneously transferred to the outermost layer on the other side (front side), and little wetness was allowed to come back from the back side to the skin. The drying properties were thus excellent.

[Example 3]

A knitted fabric was formed in the same manner as in Example 2, except that the following sea-island type composite fiber multifilament was used in place of B in Example 2 (the grey fabric density was 42 courses/2.54 cm and 36 wales/2.54 cm, and the areal weight was 74 g/m$^2$).

(Sea-Island Type Composite Fiber Multifilament)

Using polyethylene terephthalate (melt viscosity at 280°C: 1,200 poise, delusterant content: 0 wt%) as an island component and polyethylene terephthalate copolymerized with 6 mol% 5-sodium sulfoisophthalic acid and 6 wt% polyethylene glycol having a number average molecular weight of 4, 000 (melt viscosity at 280°C: 1,750 poise) as a sea component (dissolution rate ratio (sea/island) = 230), a sea-island type composite unstretched fiber, in which sea:island = 30:70 and the number of islands = 836, was melt-spun at a spinning temperature of 280°C and a spinning rate of 1,500 m/min and then wound up.

The obtained unstretched yarn was stretched using a roller at a stretching temperature of 80°C and a draw ratio of 2.5, subsequently heat-set at 150°C, and then wound up. The obtained sea-island type composite fiber multifilament had a total fineness of 56 dtex/10 fil. As a result of the observation of the transverse cross-section of the fiber under a transmission electron microscope TEM, the shape of the island was round, and the diameter of the island was 710 nm.

Next, the knitted fabric was subjected to 30% alkali weight reduction in a 3.5% aqueous NaOH solution at 70°C to remove the sea component from the sea-island type composite fiber multifilament, followed by dyeing and finishing processing in the same manner as in Example 2.

The obtained knitted fabric was a knitted fabric having a two-layer structure. The back side was made of C, and the front side was made of A and B (nanofiber having a single-yarn fiber diameter of 710 nm). The knitted fabric had a moisture retention of 5% on the back and 22% on the front, a stickiness of 53 cN (54 gf), and drying properties of 22 minutes. In addition, perspiration absorbed by the outermost layer made of A and B (nanofiber having a single-yarn fiber diameter of 710 nm) (back side) was instantaneously transferred to the outermost layer on the other side (front side), and little wetness was allowed to come back from the back side to the skin. The drying properties were thus excellent.

[Example 4]

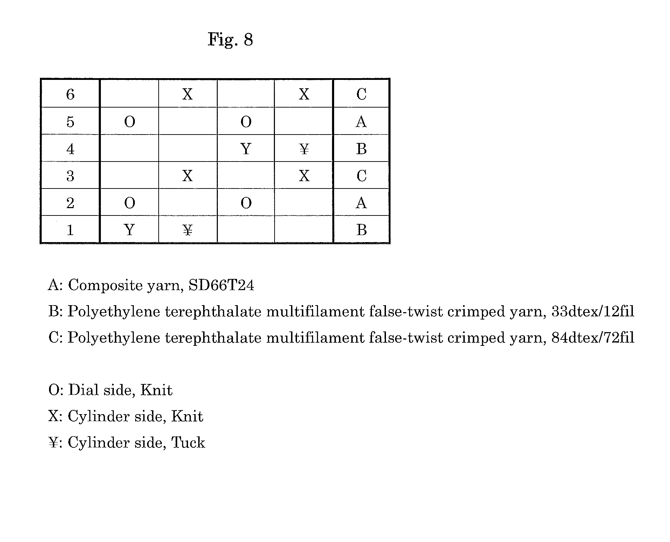

Using a 28-gauge double circular-knitting machine, a double-knotted knitted fabric was formed according to the knitting structure and the use of yarns shown in Fig. 8 from the composite yarn (A), the polyethylene terephthalate multifilament false-twist crimped yarn of 33 dtex/12 fil having a torque of 206 T/m (B), and the polyethylene terephthalate multifilament yarn of 84 dtex/72 fil (C), which are the same as in Example 2 (the grey fabric density was 47 courses/2.54 cm and 35 wales/2.54 cm, and the areal weight was 85 g/m$^2$).

Next, the knitted fabric was subjected to ordinary dyeing and finishing processing (high-pressure dyeing at 130°C for 30 minutes and dry heat setting at 170°C as the final setting).

[Example 5]

A knitted fabric was formed in the same manner as in Example 4, except that the sea-island type composite fiber multifilament used in Example 3 was used in place of B in Example 4 (the grey fabric density was 47 courses/2.54 cm and 35 wales/2.54 cm, and the areal weight was 97 g/m$^2$). The knitted fabric was subjected to dyeing and finishing processing in the same manner as in Example 3.

The obtained knitted fabric was a knitted fabric having a three-layer structure. One outermost layer (front side) was made of C, the intermediate layer was made of a nanofiber having a single-fiber diameter of 710 nm, and the other outermost layer (back side) was made of A. The knitted fabric had a moisture retention of 3% on the back and 34% on the front, a stickiness of 48 cN, and drying properties of 29 minutes. In addition, perspiration absorbed by the outermost layer made of A (back side) was instantaneously transferred to the outermost layer on the other side (front side), and little wetness was allowed to come back from the back side to the skin. The drying properties were thus excellent.

[Comparative Example 1]

A knitted fabric was obtained replacing A and B in Example 2 with a polyethylene terephthalate multifilament false-twist crimped yarn of 84 dtex/72 fil having a torque of 92 T/m (the grey fabric density was 48 courses/2.54 cm and 37 wales/2.54 cm, and the areal weight was 76 g/m$^2$).

Next, the knitted fabric was subjected to ordinary dyeing and finishing processing (high-pressure dyeing at 130°C for 30 minutes and dry heat setting at 170°C as the final setting) . The obtained knitted fabric was a knitted fabric having a two-layer structure. One outermost layer (back-side layer) was made of C, and the other outermost layer (front-side layer) was made of A and B. The knitted fabric had a coming back of 25% on the back and 20% on the front, a stickiness of 125 cN (128 gf), and drying properties of 38 minutes. In addition, perspiration absorbed by one outermost layer (back side) also remained on the back side, and much wetness came back from the back side to the skin. The drying properties were thus poor.

[Comparative Example 2]

A knitted fabric was obtained in the same manner as in Example 4, except that a polyethylene terephthalate multifilament yarn of 84 dtex/72 fil was used in place of A in Example 4 (the grey fabric density was 47 courses/2.54 cm and 35 wales/2.54 cm, and the areal weight was 90 g/m$^2$). Next, the knitted fabric was subjected to ordinary dyeing and finishing processing (high-pressure dyeing at 130°C for 30 minutes and dry heat setting at 170°C as the final setting). The obtained knitted fabric was a knitted fabric having a three-layer structure. One outermost layer (front side) was made of C, the intermediate layer was made of B, and the other outermost layer (back side) was made of C. The knitted fabric had a moisture retention of 25% on the back and 20% on the front, a stickiness of 136 cN (139 gf), and drying properties of 43 minutes. In addition, perspiration absorbed by the outermost layer made of C (back side) also remained on the back side, and much wetness came back from the back side to the skin. The drying properties were thus poor.

Industrial Applicability

The invention provides an underwear garment using a multilayered cloth made of a multilayered woven fabric structure including two or more layers or a multilayered knitted fabric structure including two or more layers, the multilayered cloth having excellent drying properties. Thus, the industrial value of the invention is extremely high.

**Claims**

1. An underwear garment using a multilayered cloth comprising a multilayered woven fabric structure including two or more layers; or a multilayered knitted fabric structure including two or more layers,
the multilayered cloth being **characterized in that** a composite yarn (3,6,9,12) having a torque of 30 T/m or less made of a false-twist crimped yarn having a torque in the S-direction and a false-twist crimped yarn (2 and 5) having a torque in the Z-direction is placed in an outermost layer of the multilayered cloth,

and the outermost layer in which the composite yarn is placed being on the inner side of the garment.

2. The underwear garment according to claim 1, wherein the composite yarn (3,6,9,12) has been subjected to interlacing processing.

3. The underwear garment according to claim 1, wherein the composite yarn (3,6,9,12) is made of a polyester fiber.

4. The underwear garment according to claim 1, wherein the composite yarn (3,6,9,12) is made of a fiber having a single-fiber fineness of 4 dtex or less.

5. The underwear garment according to claim 1, wherein the composite yarn (3,6,9,12) has a crimp degree of 2% or more.

6. The underwear garment according to claim 1, wherein a multifilament (1,4,7,10) having a single-fiber fineness of 4.0 dtex or less is placed in an outermost layer on the opposite side from the outermost layer in which the composite yarn is placed.

7. The underwear garment according to claim 6, wherein the multifilament (1,4,7,10) is a false-twist crimped yarn having a single-fiber fineness of 1.2 dtex or less.

8. The underwear garment according to claim 1, comprising a fiber having a single-fiber diameter of 1,000 nm or less as an additional fiber.

9. The underwear garment according to claim 1, comprising, as an additional fiber:

    a polyether ester fiber made of a polyether ester elastomer containing polybutylene terephthalate as a hard segment and polyoxyethylene glycol as a soft segment (8 and 11); or a composite yarn (3,6,9,12) containing the polyether ester fiber.

10. The underwear garment according to claim 1, comprising, as an additional fiber, a composite fiber containing a polyester component and a polyamide component joined together in a side-by-side manner.

11. The underwear garment according to claim 1, wherein the multilayered cloth has a three-layer structure including an outermost layer, an intermediate layer, and an outermost layer.

12. The underwear garment according to claim 11, wherein the intermediate layer contains a fiber having a single-fiber diameter of 1,000 nm or less.

13. The underwear garment according to claim 1, wherein the multilayered cloth is a knitted fabric.

14. The underwear garment according to claim 1, having an areal weight of 200 g/m$^2$ or less.

15. The underwear garment according to claim 1, wherein a hydrophilizing agent is attached to the multilayered cloth.

16. The underwear garment according to claim 1, wherein the outermost layer in which the composite yarn is placed has a surface moisture retention of 20% or less.


**Patentansprüche**

1. Unterbekleidungsartikel, der einen mehrlagigen Stoff verwendet, der eine mehrlagige Webwarenstruktur, die zwei oder mehr Lagen umfasst, oder eine mehrlagige Maschenwarenstruktur aufweist, die zwei oder mehr Lagen umfasst, wobei der mehrlagige Stoff **dadurch gekennzeichnet ist, dass** ein zusammengesetztes Garn (3,6,9,12), das einen Drall von 30 T/m oder weniger aufweist, das aus einem gekräuselten Falschdrahtgarn mit einem Drall in die S-Richtung und einem gekräuselten Falschdrahtgarn (2 und 5) mit einem Drall in die Z-Richtung besteht, in einer äußersten Lage des mehrlagigen Stoffes angeordnet ist, und die äußerste Lage, in der das zusammengesetzte Garn angeordnet ist, sich auf der Innenseite des Bekleidungsartikels befindet.

**2.** Unterbekleidungsartikel nach Anspruch 1, wobei das zusammengesetzte Garn (3,6,9,12) einer Verflechtungsbearbeitung unterzogen worden ist.

**3.** Unterbekleidungsartikel nach Anspruch 1, wobei das zusammengesetzte Garn (3,6,9,12) aus einer Polyesterfaser besteht.

**4.** Unterbekleidungsartikel nach Anspruch 1, wobei das zusammengesetzte Garn (3,6,9,12) aus einer Faser besteht, die eine Einzelfaserfeinheit von 4 dtex oder weniger aufweist.

**5.** Unterbekleidungsartikel nach Anspruch 1, wobei das zusammengesetzte Garn (3,6,9,12) einen Kräuselgrad von 2% oder mehr aufweist.

**6.** Unterbekleidungsartikel nach Anspruch 1, wobei ein Multifilament (1,4,7,10) mit einer Einzelfaserfeinheit von 4,0 dtex oder weniger in einer äußersten Lage auf der gegenüberliegenden Seite von der äußersten Lage angeordnet ist, in der das zusammengesetzte Garn angeordnet ist.

**7.** Unterbekleidungsartikel nach Anspruch 6, wobei das Multifilament (1,4,7,10) ein gekräuseltes Falschdrahtgarn ist, das eine Einzelfaserfeinheit von 1,2 dtex oder weniger aufweist.

**8.** Unterbekleidungsartikel nach Anspruch 1, der eine Faser, die einen Einzelfaserdurchmesser von 1000 nm oder weniger aufweist, als eine zusätzliche Faser aufweist.

**9.** Unterbekleidungsartikel nach Anspruch 1, der als eine zusätzliche Faser aufweist:

eine Polyetherester-Faser, die aus einem Polyetheresterelastomer besteht, das Polybutylenterephthalat als ein hartes Segment und Polyoxyethylenglykol als ein weiches Segment (8 und 11) enthält; oder ein zusammengesetztes Garn (3,6,9,12), das die Polyetherester-Faser enthält.

**10.** Unterbekleidungsartikel nach Anspruch 1, der als eine zusätzliche Faser eine zusammengesetzte Faser aufweist, die eine Polyesterkomponente und eine Polyamidkomponente enthält, die in einer nebeneinanderliegenden Weise miteinander verbunden sind.

**11.** Unterbekleidungsartikel nach Anspruch 1, wobei der mehrlagige Stoff eine dreilagige Struktur aufweist, die eine äußerste Lage, eine Zwischenlage und eine äußerste Lage aufweist.

**12.** Unterbekleidungsartikel nach Anspruch 11, wobei die Zwischenlage eine Faser aufweist, die einen Einzelfaserdurchmesser von 1000 nm oder weniger aufweist.

**13.** Unterbekleidungsartikel nach Anspruch 1, wobei der mehrlagige Stoff eine Maschenware ist.

**14.** Unterbekleidungsartikel nach Anspruch 1, der ein Flächengewicht von 200 g/m$^2$ oder weniger aufweist.

**15.** Unterbekleidungsartikel nach Anspruch 1, wobei ein Hydrophilisierungsmittel an dem mehrlagigen Stoff angelagert ist.

**16.** Unterbekleidungsartikel nach Anspruch 1, wobei die äußerste Lage, in der das zusammengesetzte Garn angeordnet ist, eine Oberflächenfeuchtigkeitsretention von 20% oder weniger aufweist.


**Revendications**

**1.** Vêtement de type sous-vêtement utilisant une étoffe multicouche comprenant un structure de tissu tissé multicouche comprenant deux ou plus de deux couches; ou une structure de tissu tricoté multicouche comprenant deux ou plus de deux couches,

l'étoffe multicouche étant **caractérisée en ce qu'**un fil composite (3, 6, 9, 12) présentant un couple de torsion de 30 T/m ou moins, constitué d'un fil frisé par fausse torsion présentant un couple de torsion dans la direction S et un fil frisé par fausse torsion (2 et 5) présentant un couple de torsion dans la direction Z, est placé dans une couche extérieure extrême de l'étoffe multicouche, et

la couche extérieure extrême dans laquelle le fil composite est placé se trouve sur le côté intérieur du vêtement.

2. Vêtement de type sous-vêtement selon la revendication 1, dans lequel le fil composite (3, 6, 9, 12) a été soumis à un procédé d'entrelacement.

3. Vêtement de type sous-vêtement selon la revendication 1, dans lequel le fil composite (3, 6, 9, 12) est constitué d'une fibre de polyester.

4. Vêtement de type sous-vêtement selon la revendication 1, lequel le fil composite (3, 6, 9, 12) est constitué d'une fibre présentant une finesse de monofibre de 4 dtex, ou moins.

5. Vêtement de type sous-vêtement selon la revendication 1, lequel le fil composite (3, 6, 9, 12) présente un degré de frisure de 2 %, ou plus.

6. Vêtement de type sous-vêtement selon la revendication 1, dans lequel un multifilament (1, 4, 7, 10) présentant une finesse de monofibre de 4,0 dtex, ou moins, est placé dans une couche extérieure extrême sur le côté opposé à la couche extérieure extrême dans laquelle le fil composite est placé.

7. Vêtement de type sous-vêtement selon la revendication 6, dans lequel le multifilament (1, 4, 7, 10) est un fil frisé par fausse-torsion qui présente une finesse de monofibre de 1,2 dtex, ou moins.

8. Vêtement de type sous-vêtement selon la revendication 1, comprenant une fibre présentant un diamètre de monofibre de 1 000 nm, ou moins, comme fibre supplémentaire.

9. Vêtement de type sous-vêtement selon la revendication 1, comprenant, comme fibre supplémentaire:

une fibre de polyéther ester constituée d'un élastomère de polyéther ester contenant du polybutylène téréphtalate comme segment dur et du polyoxyéthylène glycol comme segment mou (8 et 11); ou
un fil composite (3, 6, 9, 12) contenant la fibre de polyéther ester.

10. Vêtement de type sous-vêtement selon la revendication 1, comprenant, comme fibre supplémentaire, une fibre composite contenant un composant de polyester et un composant de polyamide joints l'un à l'autre dans une relation côte à côte.

11. Vêtement de type sous-vêtement selon la revendication 1, dans lequel l'étoffe multicouche présente une structure en trois couches comprenant une couche extérieure extrême, une couche intermédiaire et une couche extérieure extrême.

12. Vêtement de type sous-vêtement selon la revendication 11, dans lequel la couche intermédiaire contient une fibre qui présente un diamètre de monofibre de 1 000 nm, ou moins.

13. Vêtement de type sous-vêtement selon la revendication 1, dans lequel l'étoffe multicouche est un tissu tricoté.

14. Vêtement de type sous-vêtement selon la revendication 1, présentant un poids surfacique de 200 g/m$^2$, ou moins.

15. Vêtement de type sous-vêtement selon la revendication 1, dans lequel un agent d'hydrophilisation est attaché à l'étoffe multicouche.

16. Vêtement de type sous-vêtement selon la revendication 1, dans lequel la couche extérieure extrême dans laquelle le fil composite est placé présente une rétention d'humidité de surface de 20 %, ou moins.

## Fig. 1

Two-layer structure { 

1
2
3

## Fig. 2

Three-layer structure {

4
5
6

## Fig. 3

Two-layer structure {

7
8
9

## Fig. 4

Three-layer structure {

10
11
12

## Fig. 5

C2

C1

B

## Fig. 6

| 4 | × | × | × | × | C |
|---|---|---|---|---|---|
| 3 | × | × | × | × | C |
| 2 | × | × | ¥ | ¥ | B |
| 1 | × | × | ¥ | ¥ | A |

A: Composite yarn, SD110T96

B: Polyethylene terephthalate multifilament false-twist crimped yarn, 84 dtex/72 fil

C: Polyethylene terephthalate multifilament yarn, 84 dtex/72 fil

×: Knit

¥: Tuck

## Fig. 7

| 8 |   | X |   | X |   | X |   | X | C |
|---|---|---|---|---|---|---|---|---|---|
| 7 | O | X |   |   | O | ¥ |   | ¥ | B |
| 6 |   | X |   | X |   | X |   | X | C |
| 5 | O | ¥ |   |   | O | ¥ |   | ¥ | A |
| 4 |   | X |   | X |   | X |   | X | C |
| 3 | O | ¥ |   | ¥ | O |   |   |   | B |
| 2 |   | X |   | X |   | X |   | X | C |
| 1 | O |   |   | ¥ | O |   |   |   | A |

A: Composite yarn, SD66T24

B: Polyethylene terephthalate multifilament false-twist crimped yarn, 33 dtex/12 fil

C: Polyethylene terephthalate multifilament false-twist crimped yarn, 84 dtex/72 fil

O: Dial side, Knit

X: Cylinder side, Knit

¥: Cylinder side, Tuck

Fig. 8

| 6 |   | X |   | X | C |
|---|---|---|---|---|---|
| 5 | O |   | O |   | A |
| 4 |   |   | Y | ¥ | B |
| 3 |   | X |   | X | C |
| 2 | O |   | O |   | A |
| 1 | Y | ¥ |   |   | B |

A: Composite yarn, SD66T24

B: Polyethylene terephthalate multifilament false-twist crimped yarn, 33dtex/12fil

C: Polyethylene terephthalate multifilament false-twist crimped yarn, 84dtex/72fil


O: Dial side, Knit

X: Cylinder side, Knit

¥: Cylinder side, Tuck

**REFERENCES CITED IN THE DESCRIPTION**

**Patent documents cited in the description**

- JP 9316757 A
- JP 2003166136 A
- WO 2008001920 A
- JP 2009074187 B
- JP 2004270097 A
- JP 2004211268 A
- JP 2009091694 A
- JP 62011744 A
- JP 2007291567 A
- JP 2005036374 A
- JP 2006118062 A
- JP 2007002364 A